(19) Europäisches Patentamt / European Patent Office / Office européen des brevets

(11) **EP 2 979 528 A1**

(12) **EUROPEAN PATENT APPLICATION**

(43) Date of publication:
03.02.2016 Bulletin 2016/05

(51) Int Cl.:
*A01B 59/06* (2006.01)

(21) Application number: 15177256.3

(22) Date of filing: 17.07.2015

| | |
|---|---|
| (84) Designated Contracting States:<br>AL AT BE BG CH CY CZ DE DK EE ES FI FR GB GR HR HU IE IS IT LI LT LU LV MC MK MT NL NO PL PT RO RS SE SI SK SM TR<br>Designated Extension States:<br>BA ME<br>Designated Validation States:<br>MA | (71) Applicant: **AGCO International GmbH**<br>**8212 Neuhausen am Rheinfall (CH)**<br><br>(72) Inventor: **Kummer, Richard**<br>**87616 Marktoberdorf (DE)**<br><br>(74) Representative: **AGCO Intellectual Property Department**<br>**Abbey Park Stoneleigh**<br>**Kenilworth, Warwickshire CV8 2TQ (GB)** |
| (30) Priority: 31.07.2014 GB 201413546 | |

(54) **VEHICLE CONTROL SYSTEM**

(57) An implement detection system on a tractor having a linkage system for attaching an implement thereto. The linkage system comprises a lifting cylinder having a position sensor and a pressure sensor and the system further comprises a tractor control unit which records a cylinder pressure and a lifting height. The control unit has recorded parameters relating to an implement of minimum weight as selected from a range of implement weights recommended for the tractor. The parameters comprise a cylinder pressure value $p_L$ which is measured at a comparative height value $h_{comp}$ and to determine whether an implement is attached, the linkage is moved to the comparative height $h_{comp}$ and the current pressure $p$ is measured, or the linkage is moved to the pressure limit value $p_L$ and the current height $h_c$ recorded. If the current pressure is higher than the pressure limit value $p_L$, or if the current height $h_c$ is lower than the comparative height $h_{comp}$, a signal is sent to the control unit that an implement is attached.

Fig 2

**Description**

The invention relates to a control system of a vehicle, especially a tractor, having a hydraulic drive circuit in which a hydraulic pump supplies pressurised fluid to a hydraulic motor.

A hitch, such as a three-point linkage is one known arrangement which can be used to attach implements to a vehicle, for example an agricultural tractor. The implement may be fully mounted or semi-mounted on the tractor whereby a semi-mounted implement has a wheel engaging with the ground during soil operation while a fully-mounted implement puts all its load on the three-point linkage.

Three point linkages most frequently consist of two lower lifting arms to which an implement is attached. The lower lifting arms can be pivoted by respective hydraulic actuating cylinders to adjust the height position of the implement relative to the tractor. Furthermore, these lower lifting arms may be adjustable in length for an implement to be attached. An additional top link connects the implement to the tractor above the lower lifting arms. This top link is used to pivot the implement about a horizontal transverse axis and is adjustable by means of a threaded connection, or a hydraulic cylinder.

Alternative designs of three-point linkages are known, such as the arrangements shown in US6 321 851, US 2003/217852 and US 5 997 024 in which the lower links are replaced by two or four variable length hydraulic rams. This variable length ram arrangement enables multi axis movement of any implement attached to the linkage.

To control the three-point linkage, modern tractors are mainly equipped with electronic linkage control systems to improve the quality of the operation of the tractor and the operator's comfort..

Such electronic linkage control systems operate in three well known modes:

- Position control: In general, the tractor speed is kept constant by a speed control system and the position of the lower lifting arms is sensed directly or indirectly so that the working depth of an attached implement in the soil can be adjusted whilst the speed of the tractor is kept constant.

- Draft control: The implement is raised and lowered in the soil depending on the draft force applied by the implement to reduce fuel consumption, avoid engine stall or avoid damage to the tractor. Again, vehicle speed is kept constant. If the implement is lowered into the ground an initial draft is applied defining a zero level. The operator can then set a value representing a force increase which means that the operator can decide how fast the implement is lifted when a small force increase or a large force increase occurs. The value of the force entered by the operator does not represent an exact value of the force applied, e.g. 5 kN, but defines the responsiveness of the draft control. The objective of this function is to move the implement while avoiding excessive draft or pull force variations. Therefore, a draft force sensor, typically in the form of a draft force sensing pin which connects the lower lifting arms to the tractor chassis is used to measure the horizontal load applied to the tractor by the implement.

- Intermix of position/draft control: This control arrangement, as its name implies, is a mixture of position and draft control in which a draft control system can only lift the implement within a limited range of positions. This function is provided to avoid excessive movement of the implement in the soil resulting in poor working quality. Again, vehicle speed is kept constant by a speed control system.

Only the draft control and intermix mode (both referred to as drag modes) operate under measurement of the drag force. Generally, deactivating the drag modes results in that the system enters the position mode with no drag force influencing the lifting heights. It may, however be difficult to install a draft force sensing pin due to the complex three-dimensional geometry of a linkage. Further, the sensing pins may become dirty or damaged and thus may not function properly. Accordingly, a control system which does not rely on sensing pins is preferred.

A linkage control based on CVT parameters can result in that the control system moves the position of the linkage over a broad vertical displacement range as a reaction to the drag force. Various situations have been identified in which the movement of the linkage should be limited or prevented in drag mode, since otherwise the draft control will cause the implement to crash to the ground, or cause the linkage to collide with the wheels of the tractor, or the drawbar of a trailer. Normally, in the drag mode, the operator sets a value indicative of an acceptable drag force (depending on the condition of the ground and desired vehicle speed). If the drag force then rises continuously because a plough in the ground has hit a rock, the draft control will move the linkage and therefore the plough upwards so that drag force is reduced. If the drag force is reduced, the control will then lower the linkage and plough again into ground. In this way, the plough will automatically pass a rock in the ground avoiding damage to it.

Other situations have been identified where an increasing, or decreasing drag force will cause vertical displacement of the linkage and therefore any attached implement to a pre-determined lowest or highest position. Detecting these situations can be quite difficult. Some implements are simply towed by attachment to a ball hitch rather than being mounted to the linkage, with actuators on the implement controlling operating conditions of the implement based on information received from the tractor, for example via a CAN-BUS, or ISOBUS connection.

1. In the case where an implement is attached to a ball hitch on the tractor, that is the linkage is not used, a drag force determined by the CVT would deliver a significant change of drag signal when the roll of the tractor changes, or the vehicle travels uphill, or downhill or during acceleration. Under normal circumstances, this would cause the linkage to move, and thus when a tow bar is attached would cause it, or the linkage to collide with the tow bar.

2. In the case where an implement is being transported in a lifted position, the operator is ordinarily responsible for deactivating the drag or intermix mode manually when travelling along a road with an implement held in a lifted position. If this is not done the drag force determined by the CVT delivers a significant change of drag signal when the roll of the tractor changes, or the vehicle travels uphill, or downhill or during acceleration. This could result in the implement to be lowered and crashing to the ground.

3. In the case where an implement is attached which is not in contact with the ground during operation, for example fertiliser spreaders and sprayers, the CVT delivers a significant change of drag signal when the roll of the tractor changes, or the vehicle travels uphill, or downhill or during acceleration. This would ordinarily result in the implement being lifted which is not intended, or lowered which is also not intended and may be dangerous if not expected.

4. In the case of acceleration to a new speed regardless of the position of the implement, the change of drag signal may result in unintentional movement of the linkage. The faster the vehicle is going, the greater is the risk of damage through unintentional movement of the linkage.

It is an aim of the invention to provide means to notify a tractor operator as to whether an implement is attached to the tractor, or not. It is a further object of the invention to provide a drag mode control system which avoids the use of drag force sensing pins.

According to the invention there is provided an implement detection system on a tractor having a linkage system for attaching an implement thereto, the linkage system comprising a lifting cylinder having a position sensor and a pressure sensor, said system further comprising a tractor control unit which records a cylinder pressure and a lifting height and said control unit having recorded parameters relating to an implement of minimum weight as selected from a range of implement weights recommended for the tractor, wherein said parameters comprise a cylinder pressure value $p_L$ which is measured at a comparative height value $h_{comp}$ and wherein to determine whether an implement is attached, the linkage is moved to the comparative height $h_{comp}$ and the current pressure p is measured, or the linkage is moved to the pressure limit value $p_L$ and the current height $h_c$ recorded and wherein, if said current pressure is higher than the pressure limit value $p_L$, or if said current height $h_c$ is lower than the comparative height $h_{comp}$, a signal is sent to the control unit that an implement is attached.

In this way, an operator on the tractor is notifiedwhether an implement is attached to the tractor or not. The method reduces excessive movement of the linkage since the system enables the detection of an implement without the need to raise the linkage excessively

If the current pressure p is below the pressure limit value $p_L$ at said comparative height $h_{comp}$, a drag mode is preferably deactivated or prohibited for activation by a tractor operator.

If the current pressure p is below the pressure limit value $p_L$ at the comparative height $h_{comp}$, this indicates that an implement is not attached to the linkage, although it may be attached to a ball hitch. As a result, the drag mode is deactivated or prevented from being initiated so that the empty linkage will not move position automatically in response to pre determined sensed conditions or parameters on the tractor as is usual in a drag mode. This avoids an empty linkage colliding with a trailer draw bar

When the current pressure p is above the pressure limit value $p_L$ at said comparative height $h_{comp}$ a drag mode is preferably activated or kept active.

If the current pressure p is above the pressure limit value $p_L$ at said comparative height $h_{comp}$, this indicates that an implement is attached to the linkage and as a result the drag mode is activated or maintained in an active mode. In a drag mode, the linkage and therefore implement will move in response to pre determined sensed conditions or parameters on the tractor.

Preferably, the minimum implement weight is chosen from a look-up table including at least one implement attachable to the tractor, the list also providing the weight of the implement or the corresponding lifting cylinder pressure for each implement.

If a drag mode is activated the current height $h_c$ is preferably measured when the implement is lowered until the measured pressure falls below the pressure limit value $p_L$.

For linkage mounted implements, a control system can control the position of an implement attachment linkage relative to the tractor via an actuator means which raises and lowers the implement linkage relative to the tractor. Such a control system can be used to control a linkage which is attached to the rear and/or front of the tractor. No additional draft force sensors are involved as the variation of the pull force of the linkage is determined from the variation in the hydraulic drive circuit pressure. Also the need to use pin sensors is avoided.

The present invention will now be described, by way of example only, with reference to the accompanying drawings in which:-

Figure 1 shows a side view of a tractor with a linkage control system embodying the present invention,

Figure 2 shows a driveline of a tractor with a hydrostatic mechanical CVT and having a linkage control system embodying the present invention,

Figure 3 shows the hydrostatic mechanical CVT portion of the driveline of Figure 2 in more detail, and

Figure 4 shows the forces acting between a tractor wheel and the ground.

Referring to the drawings, an agricultural tractor 1 has a driveline 2 having a combustion engine 3, a flywheel 4, a continuously variable transmission, or CVT, T of the hydrostatic-mechanical split type and a rear axle housing 300. Combustion engine 3 is connected to the CVT, T by chassis part 310.

A three-point linkage 400 is attached to the rear axle housing 300 and mainly consists of two lower lifting arms 401 to which an implement is attached. A plough 500 with ground engaging means 501 is attached to lower lifting arms 401. An additional top link 402 connects the implement 500 to the tractor 1. The top link 402 is of a hydraulic type adjustable in length to adjust the inclination of the plough 500 with the ground. The lower lifting arms 401 can be pivoted about axis A by respective hydraulic actuating cylinders 403 which move rocker arm 404 and lift rod 405. The height of the lifting arms can thus be changed by pivoting the lifting arms about axis A and this movement is hereafter referred to as the vertical displacement of the lifting arms. The hydraulic actuating cylinders 403 are supplied with an actuating fluid by a control valve 406. Control valve 406 controls which chamber 403a (to lift the implement) or chamber 403b (to lower the implement) of the hydraulic actuating cylinders 403 is charged with fluid. Control valve 406 is connected to a pump 407 which is driven by combustion engine 3 and connected with a fluid tank 108.

The position of the lower lift arms 401 is indirectly measured by a position sensor 409 which senses the position of a cam 410 attached to rocker arm 404.

An additional pressure sensor 411 is provided to measure the fluid pressure in the chamber 403a of the hydraulic actuating cylinders 403. The fluid in chamber 403a is compressed when the implement weight is fully taken up by the three-point linkage 400 and therefore a pressure increase indicates movement of the implement to a high position for transportation.

A tractor control unit 13 is provided to control various functions of the vehicle. The control unit 13 is electronically connected to various components via CAN-BUS, for example, the transmission and display and input devices. The control unit 13 also contains software to drive the electronic linkage control system. The control unit 13 is connected to an input and display device 13a in the tractor cab to receive inputs from the operator and to show information to the operator.

Position sensor 409, control valve 406 and pressure sensor 411 are connected to the control unit 13.

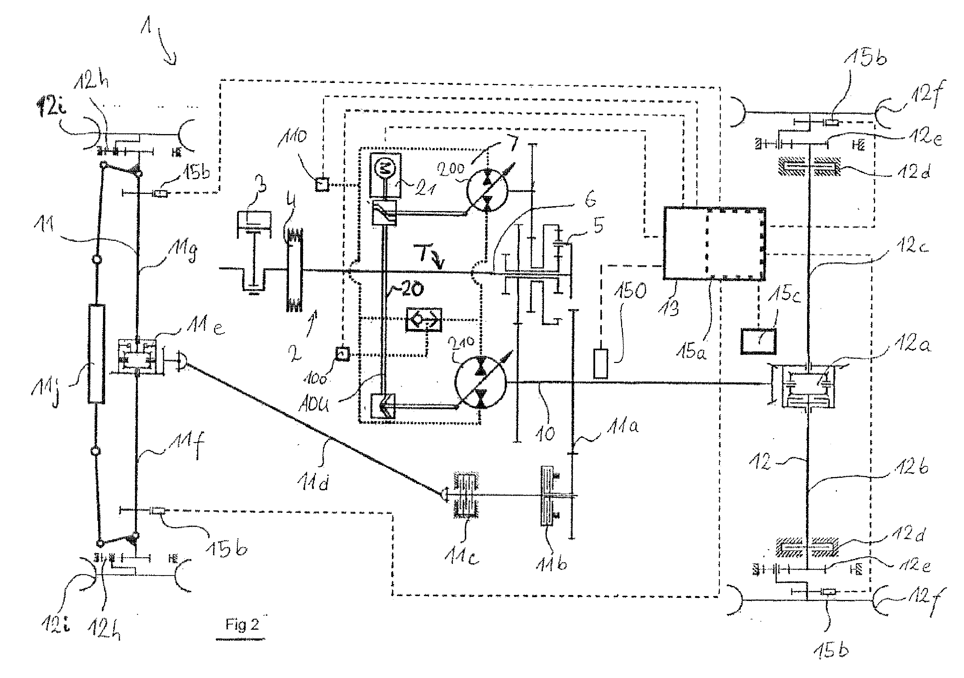

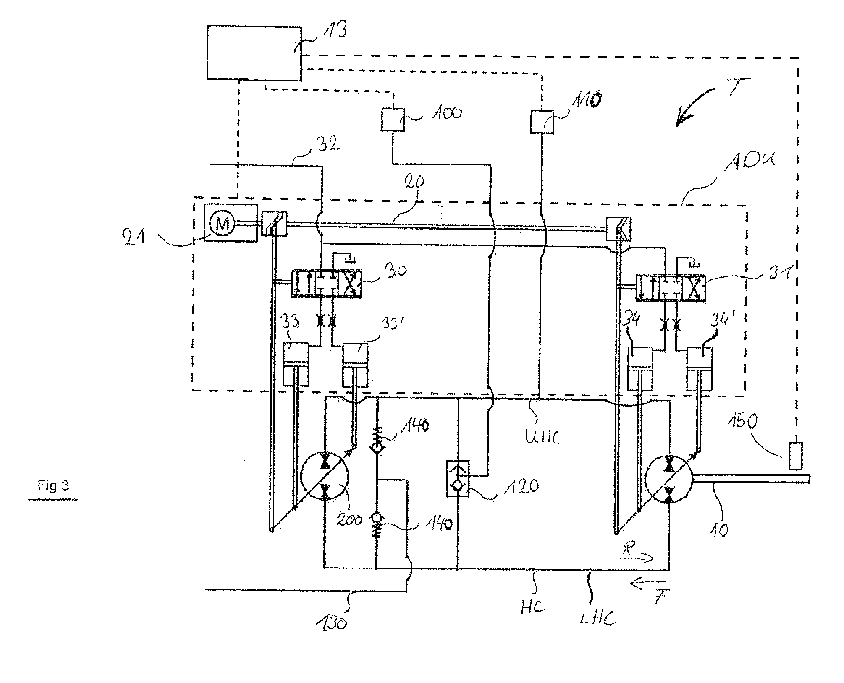

Figure 2 shows the driveline 2 of the tractor 1 in more detail. The torque supplied by combustion engine 3 via a flywheel 4 is distributed to a mechanical branch 6 and a hydrostatic branch 7 of the transmission T via a planetary drive 5. The hydrostatic branch 7 mainly consists of hydrostats 200, 210, wherein hereafter the hydrostat 200 is designated as the hydraulic pump 200 and the hydrostat 210 as the hydraulic motor 210. Both hydraulic pump 200 and hydraulic motor 210 can be pivoted by an adjustment unit, also referred to as an ADU to change delivery/intake volume as described in Figure 3.

Both the mechanical branch 6 and the hydrostatic branch 7 of the transmission are driven and brought together on a CVT output shaft 10 at the end of CVT, T. The CVT output shaft 10 delivers an output torque to the respective driveline front and rear axles 11 and 12.

CVT output shaft 10 drives a rear axle differential 12a splitting the torque to a left rear axle portion 12b and a right rear axle portion 12c. Both rear axle portions 12b, 12c are provided with brakes 12d, final reduction gears 12e and wheels 12f.

CVT output shaft 10 also drives a front axle drive gear pair 11 a followed by a front wheel drive clutch 11 b to disengage and engage front axle driveline. In addition a front brake 11 c is provided which is connected to a cardan shaft 11 d which ends in a front axle differential 11e splitting the torque to a left front axle portion 11f and a right front axle portion 11 g. Both front axle portions 11 f, 11 g are provided with final reduction gears 12h and wheels 12i. Wheels 12i are steerable about a substantially vertical axis using a hydraulic steering cylinder 11j mounted on the front axle.

The driveline 2 is also equipped with an anti-skid system which mainly consists of an anti-skid control unit 15a integrated in the tractor control unit 13 of the tractor 1, speed sensors 15b for each wheel 11i, 12f and a further anti-skid sensor 15c. The anti-skid sensor 15c provides parameters to control the brake function, for example acceleration in various axes, or inclinations of the vehicle. Anti-skid control unit 15a may be separate from tractor control unit 13. The direction of driving can be determined by a speed sensor 150 which measures the direction of rotation of hydraulic motor 210 or CVT output shaft 10 which is connected to the wheels.

Alternatively, a GPS system may also deliver parameters such as the acceleration or the inclination of the vehicle.

Figure 3 shows a diagrammatic sketch of the hydrostatic mechanical split type transmission T having an adjustment unit ADU defined by the broken line. The components outside the broken line belong to the power unit of the transmission.

The hydrostats 200, 210 illustrated in Figures 2 and 3 are an axial piston pump and an axial piston motor of an oblique-axis design, in which the delivery/intake volume is changed by the pivoting of the axis of rotation of the pistons relative to an axle drive shaft (not shown).

By means of a first valve unit 30 allocated to hydraulic pump 200 and by means of a second valve unit 31 allocated to the hydraulic motor 210, the individual pivot angle of the hydraulic pump 200 and/or of the hydraulic motor 210 can be adjusted.

Depending on the specified revolution speed transmission ratio iT set by the operator via control unit 13 an actuator element 20 is rotated by means of an actuator motor 21. The actuator motor 21 is in this case controlled by the control unit 13. Because the valve units 30, 31 are coupled to the actuator element 20, these valve units 30, 31 are displaced corresponding to the actuator element 20. As a result, oil present in a line 32 can flow into a cylinder 33, 33', 34, 34' allocated to the valve unit 30, 31.

Due to the displacement of the actuator element 20, the oil flow is accordingly directed out of line 32 and into the cylinders 33, 33', 34, 34'. Thereby the pivot angle of the hydraulic pump 200 and of the hydraulic motor 210 is adjusted. The pivot angle, and therefore the delivery volume of the hydraulic pump 200 and the intake volume of the hydraulic motor 210 can be changed accordingly. This makes it possible for the revolution speed of the axle drive shaft (not shown in Figures 2 and 3) to be adjusted, and with it the revolution speed transmission ratio of the transmission T.

The hydraulic pump 200 is connected by fluid circuit HC to the hydraulic motor 210. The fluid circuit HC in has an upper circuit UHC and a lower circuit LHC. The direction of the arrow F represents a flow direction of the fluid located inside the hydraulic circuit HC during forwards travel of the tractor and the direction of the arrow R represents a flow direction of the fluid during reverse travel of the tractor.

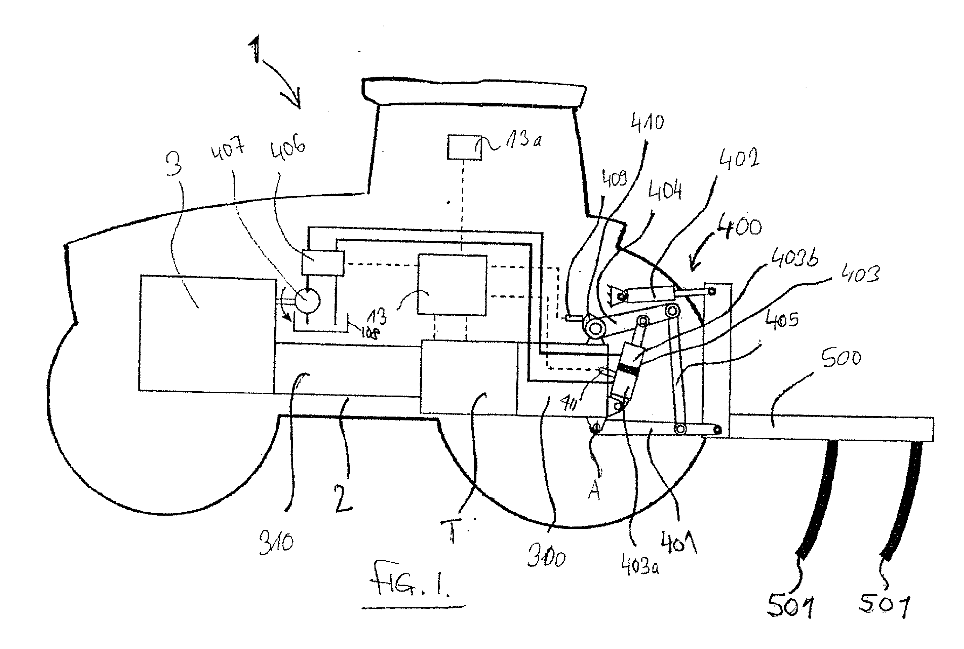

By means of a first measuring unit 110, the pressure value pUHC prevailing in the upper circuit UHC can be measured. This pressure value pUHC is then sent to the control unit 13 represented in Figure 1. Moreover, both the pressure in the upper circuit UHC as well as the pressure in the lower circuit LHC is conducted by means of a shuttle valve 120 to a second measuring unit 100 in order to measure the pressure value pHCmax. This pressure value pHCmax is also sent to the control unit 13.

The shuttle valve in the transmission T is designed in such a way so as to communicate to the second measuring unit 100 the greater of the two pressures present in the upper circuit UHC or the lower circuit LHC as a pressure value pHCmax. When the tractor is stationary, the second measuring unit 100 issues a system pressure of the upper circuit UHC or the lower circuit LHC as pressure value pHCmax. A rotation sensor, not visible in Figure 2, is arranged at the hydraulic motor 210 with which the direction of the rotation of the hydraulic motor 210 is determined and the direction of travel of the vehicle can be concluded.

When the vehicle is stationary a system pressure of about 15 bar is set in the fluid circuit HC. This system pressure of 15 bar results from the fact that, by means of a supply line 130, the fluid circuit HC is supplied with a constant system pressure by means of a constant hydraulic pump, not shown, driven by the combustion engine. Two check valves 140 prevent oil from flowing back into the supply line. As soon as the utility vehicle moves or the transmission is no longer stationary, the pressure inside the fluid circuit rises, depending on the drive torque, to a high-pressure value of over 15 bar. With an average loading of the transmission, a high-pressure value of between 250-350 bar is provided. A limit of 500 bar must not be exceeded to avoid over stressing of the transmission and its components.

Pressure pHCmax, transmission ratio iT, or the pivot angle of the hydraulic motor 210, or alternatively the intake volume V of the hydraulic motor 210 represent parameters which determine the output torque Mhydr of the hydraulic branch 7. As the transmission ratio iT is known, the pivot angle and intake volume parameters of the hydraulic motor 210 are can be determined by look-up tables or characteristic maps.

As described in relation to Figure 1, the torque supplied by combustion engine 3 is distributed to a mechanical branch 6 and a hydrostatic branch 7 of the hydrostatic mechanical split type transmission T in which the fraction of torque transmitted by both branches depends on the transmission ratio iT. So if the fraction of the hydrostatic branch 7 is determined as described above, the fraction Mmech transmitted by the mechanical branch 6 can also be determined depending on the current transmission ratio iT.

The overall output torque MOT of the transmission can then be calculated from

$$(1) \qquad MOT = Mhydr + Mmech = \frac{\text{pHCmax} * \text{V}}{2\pi} + Mmech$$

The pressure pHCmax is measured as described above and the intake volume V of the hydraulic motor 210 is determined by characteristic maps depending on the transmission ratio iT.

The output torque MOT of the transmission is supplied to the wheels resulting in a wheel torque MW:

$$(2) \qquad \text{MW} = \text{MOT} * iTW$$

In this equation iTW represents the overall gear ratio between the transmission and the wheel and is the product of the gear ratio of the rear axle differential 12a and the final reduction gears 12e in rear wheel mode. For example:

iTW = 32.97 is a product of 9.2 (for the rear axle differential 12a) x 3.58 (for the final reduction gears 12e).

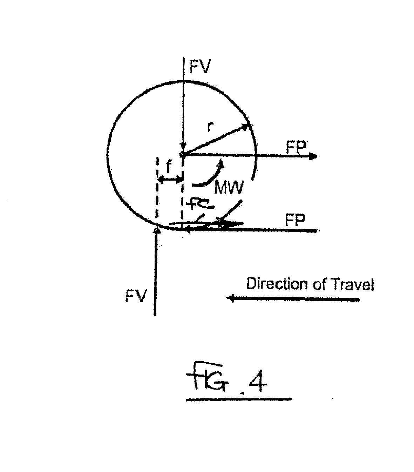

Knowing the wheel torque MW, the pull force FP can be calculated by using the known relationship of the forces on a wheel as shown in the diagram in Fig 4.

$$(3) \qquad \text{MW} = \text{FP} * \text{r} + \text{FV} * \text{f} = \text{FC} * \text{r}$$

In which:

- r represents the effective wheel radius depending on tyre pressure and wheel size provided by the wheel manufacturer in respective tables
- f represents the offset of the point of application of the wheel vertical force (see Fig 4) caused by roll resistance and sinking of the wheels

The circumferential force FC is a theoretical value achieved by converting equation (3):

$$\text{FC} = \frac{MW}{r} = \text{F}P + \text{F}V * \frac{f}{r}$$

As the linkage control only needs an indication of an increase in pull force FP, FV (which remains constant) can be ignored and so the equation can be simplified to:

$$(4) \qquad \frac{MW}{r} = \text{F}P$$

Thus an increase of the pull force ∆FP would result in an increase of the torque demand ∆MW and therefore an increase of pHCmax.

As pHCmax is constantly measured in the system, this parameter can be used to control the linkage based on an increased drag force applied by the implement.

So by monitoring pHCmax which is already done for transmission control and protection purposes, an increase or decrease of the draft or pull force can be detected and processed in the electronic linkage control system to provide functions like draft control and intermix position/draft control.

The change in drag force is fed into a tractor control unit which is programmed to lift, or lower the linkage in response to the change as programmed.

There are various situations where the movement of the linkage in response to a change in drag force in drag mode may cause problems. The drag force is the force applied by the implement against the pull force of the tractor and therefore is applied in a direction opposite to the direction of travel of the tractor. A change in pull force results in a change of drag force and vice versa if speed of the tractor is kept constant. In each case, the implement is in an operating condition be it attached to a ball hitch and not the linkage, or stowed for transportation, or attached for operation without contacting the ground, or semi mounted or fully mounted. The term implement covers all tools, attachments and equipment which can be attached to a tractor, or agricultural machine at the front, or rear including, but not limited to the following: ploughs, tow bars, sprayers, mowers, drills and planters.

In the case where an implement is attached to a ball hitch and not the linkage, or a trailer is connected by a tow bar to the tractor. A decrease in drag force may result in the linkage being lowered which may cause the linkage to collide with the ground. Similarly, if an increase in drag force is detected, for example if a tractor is travelling uphill, the linkage may be lifted which may result in collision with the tow bar of an implement/trailer.

In accordance with the invention, a method to notify a tractor operator as to whether an implement is attached to the tractor is provided.

Typically, in a first step, the presence of an implement is detected (for example, via the electric supply/light connector). Alternatively, fluid couplings may be used to detect the attachment of an implement. Such connectors, or couplings, however do not provide information as to where the implement is attached (that is whether it is attached to the linkage or to the ball hitch).

One way of determining whether the implement is attached to the linkage or ball hitch is to measure the pressure in the lifting cylinders, however, an implement attached to the ball hitch would not affect the pressure in the lifting cylinders.

A pressure value associated with a light implement may be recorded by the control unit which represents a pressure value which lies between the pressure of a hydraulic cylinder when the linkage is not loaded and the pressure of a hydraulic cylinder when a light implement is attached to the linkage. If, therefore this pressure value is exceeded, it means that an implement is attached and if the pressure value is not attained, it means the linkage is empty. The pressure value must be carefully chosen since if it is set too high, the system will deactivate the drag mode even if an implement (which may be light weight) is attached. If the pressure value is set too low, the drag mode may be kept active even if there is no implement attached.

For example, an unloaded linkage may result in the lifting cylinders indicating a pressure of 11 bar which represents a mass of the empty linkage as being around 600 kg. When a plough is fully mounted to the linkage and engages the ground the pressure may change to about 15 bar as the ground supports some of the weight of the plough. On the headland, when fully raising the plough from the ground for rotation, the pressure may increase to about 45 bar. The difference in pressure between the implement being fully mounted and an unloaded linkage is small: 4 bar $\pm$ a tolerance band of 1 to 2 bar. So, if the pressure limit is set to 13 bar (which is above the pressure caused by empty linkage and below the pressure when the plough engages ground) there may be implements which are lighter in weight and they would not be recognised by the system so that the drag mode would not be activated.

In accordance with the invention, a safer detection method is provided which is used when the linkage is raised to a lifted position (as may occur during headland turns) since in this position, the difference in pressure between an unloaded linkage and a loaded linkage is much greater and therefore easier to detect. The method reduces excessive movement of the linkage since the system enables the detection of an implement without the need to raise the linkage excessively.

An aim of the method is to avoid an empty linkage colliding with a trailer draw bar.

The method contains several steps:

STEP 1: Implement with lowest weight for given tractor type is selected

The number of different types of implements which can be used with a tractor of a particular type are restricted and generally depend on the tractor parameters of the tractor concerned, such as the weight and power of the tractor. A control system of a known type of tractor is therefore provided with a list of implements which are likely to be used with the tractor in drag mode. For example, a tractor in the 10OkW range is usually attachable to implements having a mass of 1000 Kg upwards. An implement of the lowest weight for the tractor type is selected. Alternatively, the operator could be asked to enter a minimum weight into the system.

STEP 2: A pressure limit value $p_L$ is defined

The selected implement is attached to the linkage which results in the cylinder pressure of the linkage showing a pressure limit value $p_L$. This value is then stored in the tractor control unit for comparison. The cylinder pressure however changes as the height of the linkage is adjusted (due to changing kinematics of the linkage). The pressure limit value $p_L$, can therefore only be relied upon and compared against other values of other implements if it is measured at a specific, or a known position each time a measurement is taken.

This position will typically be the fully raised position. By fully raised position, it is meant the highest position to which the linkage can be moved and corresponds to the most extended position of the hydraulic cylinders.

The pressure limit value $p_L$ enables a safe detection of a known implement only when the implement is in the fully raised position. But fully raising the linkage may result in a collision with a draw bar if it is attached to the ball hitch.

To mitigate this problem, the system is provided with an algorithm, as described in the next step.

STEP 3: Connection to an implement is detected

Any implement, whether attached to the linkage or to a ball hitch is also connected with the tractor's light supply, an ISOBUS control and/or a hydraulic/pneumatic supply, such as a supply used for operating the brakes. The tractor control system will therefore also detect whether one or more of these connections is engaged and thus determine whether an implement is attached.

STEP 4: A comparative height $h_{comp}$ is determined

The algorithm does not rely on values measured in the fully raised linkage position but tries to determine a comparative height $h_{comp}$ for comparing a current pressure, p with the pressure limit value $p_L$. There are three different conditions under which step 3 may be conducted: A ,B1 and B2. In condition A, the drag mode is activated by the operator when an implement is lifted to be attached to the linkage. In conditions B1 and B2, the implement is attached whilst it is on the ground and as such, the drag mode is not activated immediately. In condition B1, the operator confirms whether an implement is attached or not before raising the linkage. In condition B2, the operator does not confirm whether an implement is attached or not and starts raising the linkage.

A. Lifting of the implement when a drag mode is activated

The implement is lifted when a drag mode is activated, for example, by the operatorr using an external button to lift the implement during attachment to the linkage._In this situation, a height $h_1$ is established when the implement is then lowered and first engages with the ground. As the implement is further lowered onto the ground, more and more of the weight will be carried by the ground so that pressure p falls below $p_L$ The height at which this happens is described as the determined height $h_2$. 5% of this value $h_2$ is calculated and added to the determined height $h_2$ to allow for variations or corrections in measurements. The resulting value is the comparative height, $h_{comp}$:

$$h_{comp} = h_2 + 5\%(\ h_2)$$

Another situation arises when the implement engages with the ground and drag mode not activated. In this situation, the current pressure, p is below pressure limit value $p_L$ (as the weight of the implement is supported by the ground). As a result, the drag mode is not activated immediately. The operator is informed that a drag mode is not activated and then either of the two following alternative sub procedures (B1) or (B2) is adopted:

B1. Confirmation of attached implement inputted by the Operator

In condition B1, the operator confirms whether an attachment is connected to the linkage by entering such confirmation into the control unit 13.

The comparative height $h_{comp}$ is then determined when the implement is lifted or lowered again during the next headland operation. The height $h_1{}^*$ is the height when the pressure limit value $p_L$ is reached for the first time:

$$\text{comparative height } h_{comp} = h_1{}^* + 5\%$$

B2. Implement lifted manually without operator inputting confirmation of attached implement

In condition B2, the operator manually raises the linkage without confirming whether an implement is attached or not. Height $h_2{}^*$ is determined when the pressure limit value $p_L$ is exceeded for the first time.

$$\text{comparative height } h_{comp} = h_2{}^* + 5\%$$

The comparative height, $h_{comp}$ can therefore be established for different conditions as to how the implement is attached to the linkage. If the system has detected the implement properly, the drag mode remains active.

STEP 5: Current pressure with reference to the lifting height is monitored

The system monitors the signals for the current pressure and lifting height. If the current $h_{comp}$ is reached, the current pressure p is compared with the pressure limit valve $p_L$. This comparison is driven during the complete operation as long as the vehicle is not brought into a condition wherein the implement could be changed as described below. If p is equalor higher, the pressure limit value $p_L$ at the previously determined comparative height $h_{comp}$, it signals that there is an implement attached to the linkage, or that the implement previously recognised was not detached. The drag mode is kept active. If the pressure limit value $p_L$ is not reached, indicating that there is not an implement attached, or that a different implement may be attached, the drag mode is de-activated.

If the vehicle is in stand-still or is shut down (which allows the implement to be changed) the comparative height, $h_{comp}$ is reset. Short periods of stopping is however allowed by the system for example, short stops during headland turns or when monitoring the work to be done without the system resetting the comparative height, $h_{comp}$.

If the vehicle is not brought into a condition which would enable a change of implement, for example, when the vehicle is constantly driven over a field and performs headland turns without stopping, the system can adapt the comparative height, $h_{comp}$ during operation. This may be performed during a headland turn, for example when the linkage is lifted or lowered to a height in which the current pressure reaches pressure limit value $p_L$.

Such a condition could also be indicated when the implement is disconnected and the light supply, ISOBUS control or hydraulic/pneumatic supply is also disconnected from the tractor

STEPs 1 and 2 only need to be performed once and can then be stored in the tractor control unit 13.

The procedure is now explained with an example:

If steps 1 and 2 are already completed and stored on the tractor ECU and the tractor is on the field when the operator activates a drag mode, the system recognises an attached implement via the light connector, or other means as previously described in step 3. However, the system does not know if the implement is attached to a three-point linkage, or to a ball hitch.

Using Step 4, a comparative height is determined by:

1. Raising the linkage to a position where the current pressure, p is greater than the pressure limit value $p_L$ (p> $p_L$).

If the linkage is in a raised position, the pressure in a lifting cylinder may already exceed the pre-defined pressure limit value $p_L$ depending on the implement profile stored in the control unit. The implement is safely detected so the drag mode can be kept activated. Also in this condition, the system determines the comparative height during lowering for further detection.

If the initial current pressure, p is less than the pressure limit value, $p_L$ (p< $p_L$) this may indicate that the implement is not attached to the linkage. The operator can then be asked to confirm how the implement is attached. Activation of a drag mode would then be allowed.

A further option based on the comparative height method is provided without requiring any input from the operator as the system cannot detect implement attachment initially.

In this case, the system would firstly abort the drag mode and send a message to operator. The tractor would then only operate in the position mode. If the implement is then lifted (for example, whilst conducting a headland turn) and the current pressure, p exceeds pressure limit value $p_L$ during lifting, this height would be stored as comparative height, $h_{comp}$. When the determined comparative height $h_{comp}$ is reached, the pressure is then compared with the pressure limit valve, $p_L$ ($\pm 5\%$).

If the operator were to stop the tractor (without shutting it down) for a short time and detach the plough without the system resetting the comparative height, the system would revert to a drag mode until the next headland. When lifting the implement, the system would detect that at the pre-determined comparative height, the current pressure, p is different than pressure limit value $p_L$ ($\pm 5\%$) and abort the drag mode.

In an alternative method, the height of the linkage instead of the pressure of the linkage is measured. Instead of moving the linkage to the comparative height $h_{comp}$ and measuring the current pressure p, the linkage is moved to the pressure limit value $p_L$ and the height at which this occurs, the current height $h_c$ is recorded. If the current height $h_c$

is lower than the comparative height $h_{comp}$, a signal is sent to the control unit that an implement is attached.

Although the foregoing examples have concentrated on linkage control systems, as indicated previously the invention is not so limited, being applicable to any tractor control system for the controlled operation of an implement where a drag force measurement is required.

**Claims**

1. An implement detection system on a tractor having a linkage system for attaching an implement thereto, the linkage system comprising a lifting cylinder having a position sensor and a pressure sensor, said system further comprising a tractor control unit which records a cylinder pressure and a lifting height and said control unit having recorded parameters relating to an implement of minimum weight as selected from a range of implement weights recommended for the tractor, wherein said parameters comprise a cylinder pressure value $p_L$ which is measured at a comparative height value $h_{comp}$ and wherein to determine whether an implement is attached, the linkage is moved to the comparative height $h_{comp}$ and the current pressure p is measured, or the linkage is moved to the pressure limit value $p_L$ and the current height $h_c$ recorded and wherein, if said current pressure is higher than the pressure limit value $p_L$, or if said current height $h_c$ is lower than the comparative height $h_{comp}$, a signal is sent to the control unit that an implement is attached.

2. An implement detection system according to claim 1 wherein if the current pressure p is below the pressure limit value $p_L$ at said comparative height $h_{comp}$ a drag mode is deactivated or prohibited for activation by a tractor operator.

3. An implement detection system according to claim 1 or claim 2 wherein when the current pressure p is above the pressure limit value $p_L$ at said comparative height $h_{comp}$ a drag mode is activated or kept active.

4. An implement detection system according to any preceding claim wherein the minimum implement weight is chosen from a look-up table including at least one implement attachable to the tractor, the list also providing the weight of the implement or the corresponding lifting pressure for each implement.

5. An implement detection system as claimed in any preceding claim wherein if a drag mode is activated the current height $h_c$ is measured when the implement is lowered until the measured pressure falls below the pressure limit value $p_L$.

FIG.1.

EP 2 979 528 A1

Fig 2

Fig 3

FIG. 4

Europäisches
Patentamt

European
Patent Office

Office européen
des brevets

**EUROPEAN SEARCH REPORT**

Application Number

EP 15 17 7256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2008/110647 A1 (GUO HAIBO [US] ET AL) 15 May 2008 (2008-05-15) * paragraphs [0005], [0020] - [0036]; figures 1-3 * | 1-5 | INV. A01B59/06 |
| A | US 4 969 527 A (BOE THOMAS E [US] ET AL) 13 November 1990 (1990-11-13) * column 3, line 31 - column 9, line 57; figures 1-31 * | 1-5 | |
| A | WO 2013/053645 A1 (AGCO INT GMBH [CH]) 18 April 2013 (2013-04-18) * page 5, line 28 - page 12, line 12; figures 1-3 * | 1-5 | |

TECHNICAL FIELDS
SEARCHED      (IPC)

A01B

The present search report has been drawn up for all claims

| Place of search | Date of completion of the search | Examiner |
|---|---|---|
| Munich | 7 December 2015 | Lucchesi-Palli, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 7256

This annex lists the patent family members relating to the patent documents cited in the above-mentioned European search report.
The members are as contained in the European Patent Office EDP file on
The European Patent Office is in no way liable for these particulars which are merely given for the purpose of information.

07-12-2015

| Patent document cited in search report | | Publication date | Patent family member(s) | | Publication date |
|---|---|---|---|---|---|
| US 2008110647 | A1 | 15-05-2008 | NONE | | |
| US 4969527 | A | 13-11-1990 | CA | 2029009 A1 | 14-05-1991 |
| | | | DE | 59006421 D1 | 18-08-1994 |
| | | | DE | 59010438 D1 | 05-09-1996 |
| | | | DE | 59010844 D1 | 10-09-1998 |
| | | | EP | 0428076 A1 | 22-05-1991 |
| | | | EP | 0590692 A1 | 06-04-1994 |
| | | | EP | 0714592 A2 | 05-06-1996 |
| | | | JP | 3058441 B2 | 04-07-2000 |
| | | | JP | H03172105 A | 25-07-1991 |
| | | | US | 4969527 A | 13-11-1990 |
| WO 2013053645 | A1 | 18-04-2013 | EP | 2765844 A1 | 20-08-2014 |
| | | | WO | 2013053645 A1 | 18-04-2013 |

EPO FORM P0459

For more details about this annex : see Official Journal of the European Patent Office, No. 12/82

**EP 2 979 528 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6321851 B
- US 2003217852 A
- US 5997024 A